(19) Europäisches Patentamt / European Patent Office / Office européen des brevets

(11) **EP 2 547 020 A1**

(12) **EUROPEAN PATENT APPLICATION**
published in accordance with Art. 153(4) EPC

(43) Date of publication:
**16.01.2013 Bulletin 2013/03**

(51) Int Cl.:
***H04J 99/00*** *(2009.01)*  ***H04J 11/00*** *(2006.01)*
***H04W 28/18*** *(2009.01)*

(21) Application number: **11753217.6**

(22) Date of filing: **28.02.2011**

(86) International application number:
**PCT/JP2011/054495**

(87) International publication number:
**WO 2011/111557 (15.09.2011 Gazette 2011/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2010 JP 2010052140**

(71) Applicant: **NTT DoCoMo, Inc.**
**Tokyo 100-6150 (JP)**

(72) Inventors:
• **TAOKA, Hidekazu**
**Tokyo 100-6150 (JP)**

• **DEITL, Guido**
**Tokyo 100-6150 (JP)**
• **KUSUME, Katsutoshi**
**Tokyo 100-6150 (JP)**

(74) Representative: **HOFFMANN EITLE**
**Patent- und Rechtsanwälte**
**Arabellastrasse 4**
**81925 München (DE)**

(54) **CODE BOOK CONTROL METHOD, BASE STATION APPARATUS AND MOBILE STATION APPARATUS**

(57)    To facilitate selection of an optimal PMI corresponding to a channel variance in a channel propagation path, in a method of controlling codebooks comprised of a plurality of DFT codebooks for def ining precoding matrixes that are selected when correlation between antennas in a base station apparatus (eNode B) is high and a plurality of random codebooks for defining precoding matrixes that are selected when correlation between antennas in the base station apparatus (eNode B) is low, a channel variance in a channel propagation path is estimated, and based on the estimated channel variance, the configuration ratio between the DFT codebooks and the random codebooks included in the codebooks is varied adaptively.

FIG. 1

**Description**

Technical Field

The present invention relates to a codebook control method, base station apparatus and mobile station apparatus, and more particularly, to a codebook control method, base station apparatus and mobile station apparatus in the next-generation mobile communication system.

Background Art

In UMTS (Universal Mobile Telecommunications System) networks, for the purpose of improving spectral ef f iciencyand further improving data rates, by adopting HSDPA (High Speed Downlink Packet Access) and HSUPA (High Speed Uplink Packet Access), it is performed exploiting maximum features of the system based on W-CDMA (Wideband Code Division Multiple Access) . For the UMTS network, for the purpose of further increasing high-speed data rates, providing low delay and the like, Long Term Evolution (LTE) has been studied.

In the 3G system, a fixed band of 5 MHz is substantially used, and it is possible to achieve transmission rates of approximately maximum 2 Mbps in downlink. Meanwhile, in the LTE-scheme system (LTE system), using variable bands ranging from 1.4 MHz to 20 MHz, it is possible to achieve transmission rates of maximum 300 Mbps in downlink and about 75 Mbps in uplink. Further, in the UMTS network, for the purpose of further increasing the wide-band and high speed, successor systems to LTE have been studied (for example, LTE Advanced (LTE-A)). For example, in LTE-A, it is scheduled to increase 20 MHz that is the maximum system band in LTE specifications to about 100 MHz.

Further, in the LTE system, MIMO (Multi Input Multi Output) systems are proposed as radio communication techniques for transmitting and receiving data using a plurality of antennas and improving a data rate (spectral efficiency) (for example, see Non-patent Document 1). In the MIMO systems, the transmitter/receiver is provided with a plurality of transmission/reception antennas, and simultaneously transmits different transmission information sequences from different transmission antennas. Meanwhile, the receiver side exploits the fact that different fading variations occur in between transmission and reception antennas, and divides the simultaneously-transmitted information sequences to detect, and it is thereby possible to increase the data rate (spectral efficiency) .

In the LTE system are specified Single User MIMO (SU-MIMO) transmission in which transmission information sequences simultaneously transmitted from different transmission antennas are all for the same user and Multiple User MIMO (MU-MIMO) transmission in which the transmission information sequences are for different users. In the SU-MIMO transmission and MU-MIMO transmission, the receiver side selects an optimal PMI (Precoding Matrix Indicator) from a codebook that defines a plurality of phase/amplitude control amounts (precoding matrixes (precoding weights)) to set on antennas of the transmitter and PMIs associated with the precoding matrixes, and transmits the PMI to the transmitter as feedback. The transmitter side performs precoding on each transmission antenna based on the PMI that is transmitted from the receiver as feedback, and transmits transmission information sequences.

Prior Art Document

Non-patent Document

[Non-patent Document 1] 3GPP TR 25.913 "Requirements for Evolved UTRA and Evolved UTRAN"

Summary of Invention

Technical Problem

Generally, in a codebook suitable for SU-MIMO transmission, it is preferable to def ine precoding matrixes for enabling signals to be divided effectively in a mobile station apparatus UE that is a receiver when correlation between antennas is low in a base station apparatus eNode B that is a transmitter. Meanwhile, in a codebook suitable for MU-MIMO transmission, it is preferable to define precoding matrixes for enabling signals to be divided effectively in a mobile station apparatus UE when correlation between antennas is high in a base station apparatus eNode B. Therefore, in the case of performing data transmission while switching between SU-MIMO transmission and MU-MIMO transmission, it is necessary to defineprecodingmatrixes for enabling signals tobe dividedeffectively in a mobile station apparatus UE in both the case where correlation between antennas in a base station apparatus eNode B is high and the case where such correlation is low.

Then, in conventional codebooks of the LTE system and the like, codebooks used in precoding are capable of being divided into two groups from the viewpoint of high and low of correlation between antennas in a base station apparatus eNode B. In other words, it is thought that the codebooks are comprised of a first codebook group formed of a plurality of first codebooks that are selected when correlation between antennas in a base station apparatus eNode B is high, and a second codebook group formed of a plurality of second codebooks that are selected when correlation between antennas in the base station apparatus eNode B is low. Then, in the first and second codebook groups, the numbers of the first codebooks and the second codebooks respectively included in the groups are determined in generating the codebooks, and are fixed irrespective of correlation between antennas.

The above-mentioned PMI is selected from the first and second codebook groups in a mobile station apparatus UE that is a receiver corresponding to a channel variance in the channel propagation path. However, in the conventional codebooks of the LTE system and the like, since the numbers of the first and second codebooks included in the first and second codebook groups are fixed to limited numbers, respectively, selectable PMIs are limited, and events may occur that it is not possible to select an optimal PMI corresponding to the channel variance. As a simplest solving method, it is conceivable to increase the size of codebooks included in each codebook group, but in this case, there is the problem of increases in overhead required for feedback of a PMI selected in the mobile station apparatus UE.

The present invention was made in view of such circumstances, and it is an object of the invention to provide a codebook control method, base station apparatus and mobile station apparatus for facilitating selection of an optimal PMI corresponding to the channel variance in the channel propagation path.

Means for Solving the Problem

A codebook control method of the invention is a method of controlling codebooks comprised of a plurality of first codebooks having a DFT (Discrete Fourier Transform) structure for defining precoding matrixes that are selected when correlation between antennas in a base station apparatus is high and a plurality of second codebooks for defining precoding matrixes that are selected when correlation between antennas in the base station apparatus is low, and is characterized by having the steps of estimating a channel variance in a channel propagation path, and varying adaptively the configuration ratio between the first and second codebooks included in the codebooks based on the channel variance.

According to this method, a channel variance in the channel propagation path is estimated, the configuration ratio between the first and second codebooks included in the codebooks is varied adaptively based on the channel variance, it is thereby possible to increase or decrease the numbers of the first and second codebooks corresponding to the channel variance, and it is thus possible to increase selectable PMIs, and to facilitate selection of an optimal PMI corresponding to the channel variance.

A base station apparatus of the invention is a base station apparatus that performs precoding using codebooks comprised of a plurality of first codebooks having a DFT structure for defining precoding matrixes that are selected when correlation between antennas in the base station apparatus is high and a plurality of second codebooks for defining precoding matrixes that are selected when correlation between antennas in the base station apparatus is low, and is characterized by having estimationmeansfor estimating a channel variance in a channel propagation path, and control means for varying adaptively the configuration ratio between the first and second codebooks included in the codebooks based on the channel variance.

According to this configuration, a channel variance in the channel propagation path is estimated, the configuration ratio between the first and second codebooks included in the codebooks is varied adaptively based on the channel variance, it is thereby possible to increase or decrease the numbers of the first and second codebooks corresponding to the channel variance, and it is thus possible to increase selectable PMIs, and to facilitate selection of an optimal PMI corresponding to the channel variance.

A mobile station apparatus of the invention is a mobile station apparatus that transmits precoding matrix identification information to a base station apparatus according to codebooks comprised of a plurality of first codebooks having a DFT (Discrete Fourier Transform) structure for defining precoding matrixes that are selected when correlation between antennas in the base station apparatus is high and a plurality of second codebooks for defining precoding matrixes that are selected when correlation between antennas in the base station apparatus is low, and is characterized by having receiving means for receiving codebook information including information on the first and second codebooks selected based on a channel variance in a channel propagation path, and selecting means for selecting the precoding matrix identification information from the first and second codebooks included in the codebook information.

According to this configuration, codebooks used in data transmission are identified based on the codebook information notified from the base station apparatus, anda PMI is selected that is associated with a precoding matrix defined in the codebooks. At this point, in the identified codebooks, the configuration ratio between the first and second codebooks is adjusted based on the channel variance estimated in the base station apparatus, it is thereby possible to increase or decrease the numbers of the first and second codebooks corresponding to the channel variance, and it is thus possible to increase selectable PMIs, and to facilitate selection of an optimal PMI corresponding to the channel variance. Advantageous Effect of the Invention

According to the invention, a channel variance in the channel propagation path is estimated, the configuration ratio between the first and second codebooks included in the codebooks is varied adaptively based on the channel variance, it is thereby possible to increase or decrease the numbers of the first and second codebooks corresponding to the channel variance, and it is thus possible to increase selectable PMIs, and to facilitate selection of an optimal PMI corresponding to the channel variance.

Brief Description of Drawings

FIG. 1 is a conceptual diagram to explain a configuration of a codebook in the LTE system;

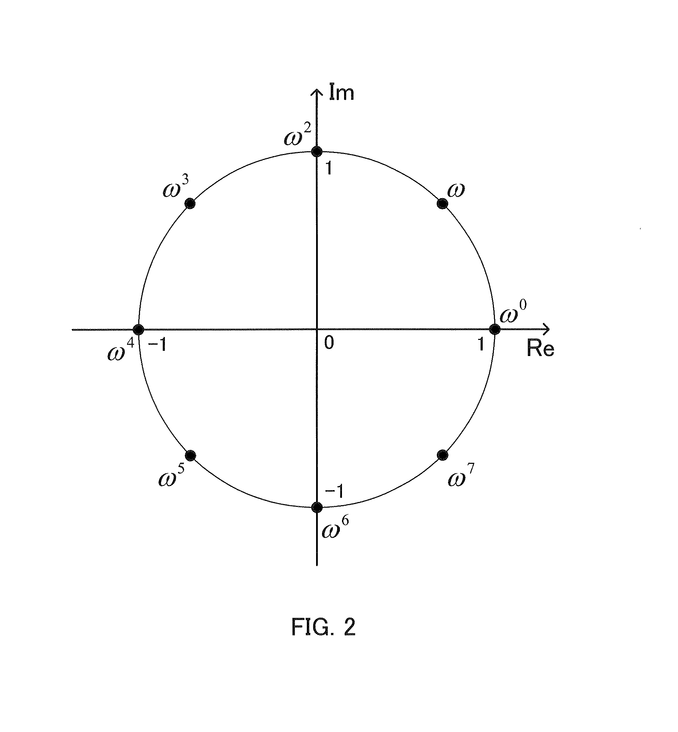

FIG. 2 is a diagram to explain signal points on the complex plane associated with precoding matrixes defined in a DFT codebook;
FIG. 3 is a diagram showing an example of codebooks for high correlation used in a codebook control method according to the invention;
FIG. 4 is a diagram showing an example of codebooks for low correlation used in the codebook control method according to the invention;
FIG. 5 is a diagram to explain a configuration of a mobile communication system having mobile station apparatuses and base station apparatus according to one Embodiment of the invention;
FIG. 6 is a block diagram illustrating a configuration of the mobile station apparatus according to the Embodiment; and
FIG. 7 is a block diagram illustrating a configuration of the base station apparatus according to the Embodiment.

Best Mode for Carrying Out the Invention

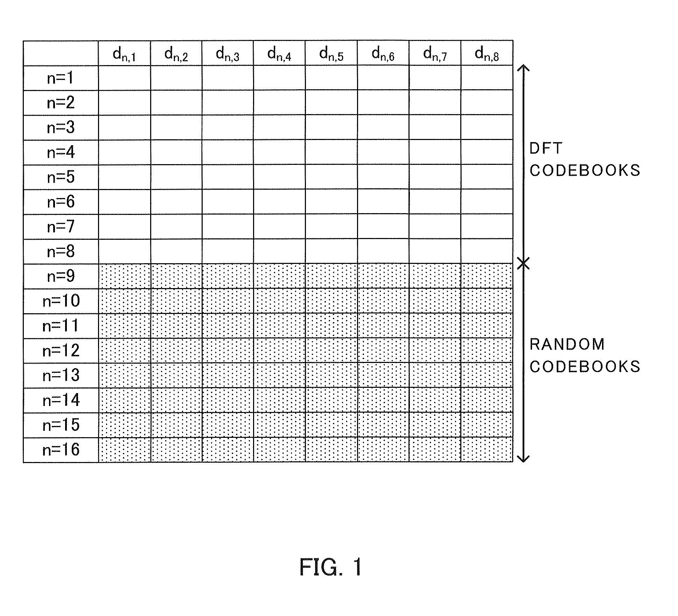

Described first is a configuration of a codebook in the LTE system. FIG. 1 is a conceptual diagram to explain the configuration of the codebook in the LTE system. In addition, FIG. 1 shows the case where the number of PMIs included in the codebook is "16" and the number of ranks (streams) is "8". In FIG. 1, "n" indicates an index of the PMI, and "$d_{n,1}$" to "$d_{n,8}$" indicate the ranks. In the codebook are defined precoding matrixes corresponding to respective ranks of each PMI (in FIG. 1, for convenience in description, descriptions of precoding matrixes are omitted.) In addition, in the following description, for convenience in description, not only the entire codebook as shown in FIG. 1, precoding matrixes (i.e. eight precoding matrixes) associated with each PMI are also called a codebook (DFT codebook and random codebook, described later).

As shown in FIG. 1, the codebooks in the LTE system are capable of being divided into two groups from the viewpoint of high and low of correlation between antennas in a base station apparatus eNode B. In other words, it is thought that the codebooks in the LTE system are comprised of a first codebook group formed of a plurality of first codebooks that are selected when correlation between antennas in a base station apparatus eNode B is high, and a second codebook group formed of a plurality of second codebooks that are selected when correlation between antennas in the base station apparatus eNode B is low.

The first codebooks are comprised of codebooks (hereinafter, referred to as "DFT codebooks") havingaDFT (Discrete Fourier Transform) structure. In the DFT codebooks, for example, using a codebook group of 8x8 of the numbers of PMIs and ranks as an example, the codebooks have matrix elements shown in (Eq.1).

(Eq.1)

$$\mathbf{F}_8 = \frac{1}{\sqrt{8}} \begin{bmatrix} 1 & 1 & 1 & 1 & 1 \\ 1 & \omega & \omega^2 & \cdots & \omega^7 \\ 1 & \omega^2 & \omega^4 & \cdots & \omega^{14} \\ \vdots & \vdots & \vdots & \ddots & \vdots \\ 1 & \omega^7 & \omega^{14} & \cdots & \omega^{49} \end{bmatrix}$$

For example, with attention directed to matrix elements of the second column shown in (Eq.1), values (1, $\omega$, $\omega^2$, $\omega^3$, $\omega^4$, $\omega^5$, $\omega^6$, $\omega^7$) are defined in the first to eighth rows. When these values are expressed on the complex plane, as shown in FIG, 2, the values constitute signal points with the phase shifted at equal intervals. This means that it is possible to obtain equal gain in any direction in which the signal arrives when correlation between antennas in a base station apparatus eNode B is high. Further, the DFT codebooks have the advantage that it is possible to determine matrix elements (precoding matrix) of each codebook uniquely when the number (for example, "8" in the case of FIG. 1) of defined DFT codebooks is identified.

Meanwhile, the second codebooks do not have the DFT structure, and are comprised of codebooks (hereinafter, referred to as "random codebooks") that are randomly determined. The random codebooks are calculated based on arithmetic processing of the chordal distance, described later, in the relationship with the codebooks including the above-mentioned DFT codebooks. In the arithmetic processing of the chordal distance, the operation is performed so as to define precoding matrixes for enabling signals to be effectively divided in a mobile station apparatus UE that is a receiver when correlation between antennas in the base station apparatus eNode B is low.

Described herein is a criterion to evaluate precoding matrixes defined in the codebooks. As the criterion to evaluate precoding matrixes, different criteria are used according to high and low of correlation between antennas in a base station apparatus eNode B. More specifically, an array response is used when correlation between antennas in a base station apparatus eNode B is high. Meanwhile, the chordal distance is used when correlation between antennas in the base station apparatus eNode B is low.

The array response indicates amplitude of a reception signal vector in each antenna element subjected to antenna combining in an angular direction $\theta$. For example, the array response is calculated by (Eq.2) (in addition, (Eq. 2) shows a calculation result of the array response of the precoding matrix of rank 1.) When the array response is used as a criterion, a precoding matrix is selected so that the value calculated by (Eq.2) or the like is the maximum. By thus selecting a precoding matrix, it is possible to obtain suitable gain in the direction in which the signal arrives with respect to the antenna. Herein, a $(\theta)$ is a steering vector (array response vector), and is expressed by (Eq.3). Herein, "e" represents natural logarithm, and "j" represents an imaginary number. Further, "$\mu$" represents a phase rotation amount, and as shown in (Eq. 4), is determined by signal arrival angle $\theta$, antenna distance d, and wavelength $\lambda$ with respect to a carrier frequency.

$$(\mathrm{Eq.2})$$

$$\left\| \mathbf{a}(\theta)^{\mathrm{H}} \mathbf{G}_{n,1} \right\|$$

$$(\mathrm{Eq.3})$$

$$\mathbf{a}(\theta) = \begin{bmatrix} 1 & \mathrm{e}^{\mathrm{j}\mu} & \mathrm{e}^{\mathrm{j}2\mu} & \cdots & \mathrm{e}^{\mathrm{j}7\mu} \end{bmatrix}^{\mathrm{T}}$$

$$(\mathrm{Eq.4})$$

$$\mu = 2\pi \frac{d}{\lambda} \sin(\theta)$$

In addition, in DFT codebooks belonging to the first codebook group (hereinafter, referred to as a "DFT codebook group") as described above, since the codebooks have the DFT structure, it is possible to select precoding matrixes so that it is possible to obtain equal gain in any direction in which the signal arrives (i.e. a calculation result of the array response is large in any direction in which the signal arrives.)

Meanwhile, the chordal distance indicates a distance between precoding matrixes targeted for comparison (in other words, the degree of similarity in the direction of a precoding vector associated with the precoding matrix), and is calculated by (Eq. 5). In the case of using the chordal distance as a criterion, a minimum value $d_{min}$ (R) of chordal distances $d_{chord}$ calculated by (Eq.5) is calculated by (Eq.6), and the precoding matrix such that the minimum value $d_{min}$ (R) is maximum is selected for each rank. By thus selecting the precoding matrix, it is possible to define precoding matrixes of which characteristics are not mutually similar in the random codebooks. Herein, "R" represents the rank, "n" and "m" represent variables associated with the index of PMI, and "G" represents a precoding matrix.

$$(Eq.5)$$

$$d_{\mathrm{chord}}(R,n,m) = \sqrt{R - \left\| \mathbf{G}_{n,R}^{\mathrm{H}} \mathbf{G}_{m,R} \right\|_{\mathrm{F}}^{2}}$$

$$(Eq.6)$$

$$d_{\min}(R) = \min_{\substack{n,m \\ n \neq m}} d_{\mathrm{chord}}(R,n,m)$$

Such arithmetic processing of the chordal distance $d_{chord}$ is performed by the following process. First, after the predetermined number of DFT codebooks is set, random codebooks belonging to the second codebook group (hereinafter, referred to as a "random codebook group") are determined randomly. Then, chordal distances $d_{chord}$ of all precoding matrixes included in the determined random codebooks and DFT codebooks are calculated from all precoding matrixes of the same rank in the other codebooks (Eq.5). Then, the minimum value $d_{min}$ (R) among calculated chordal distances $d_{chord}$ is calculated for each rank (Eq. 6). Next, the entire random codebooks are updated, chordal distances $d_{chord}$ of all precoding matrixes included in the updated random codebooks and DFT codebooks are calculated again, and the minimum value $d_{min}$ (R) among the distances is calculated for each rank. In this case, when the minimum value $d_{min}$ (R) of succeeding chordal distances $d_{chord}$ is larger than the minimum value $d_{min}$ (R) of preceding chordal distances $d_{chord}$, updated random codebooks are selected. Meanwhile, when the minimum value $d_{min}$ (R) of preceding chordal distances $d_{chord}$ is larger than the minimum value $d_{min}$ (R) of succeeding chordal distances $d_{chord}$, random codebooks prior to update are selected. Such arithmetic processing is performed until the minimum value $d_{min}$ (R) of the chordal distance $d_{chord}$ is the maximum.

Codebooks are generated by thus selecting DFT codebooks belonging to the DFT codebook group and random codebooks belonging to the random codebook group. In this case, the number of DFT codebooks belonging to the DFT codebook group is determined to the number designated in generation of codebooks. Meanwhile, the random codebooks belonging to the random codebook group is determined to the number obtained by subtracting the number of DFT codebooks from the number of codebooks (DFT codebooks and random codebooks) included in the entire codebooks. In other words, the numbers of DFT codebooks and random codebooks are determined in generating codebooks and fixed.

Thus generated codebooks are used in a mobile station apparatus UE in selecting a PMI corresponding to an optimal precoding matrix (precoding weights) to set on antennas of the base station apparatus eNode B. In this case, for example, the PMI is selected from DFT codebooks included in the DFT codebook group when correlation between antennas in the base station apparatus eNode B is high, while being selected from random codebooks included in the random codebook group when correlation between antennas in the base station apparatus eNode B is low.

However, in the codebooks in the LTE system, since the numbers of DFT codebooks and random codebooks respectively belonging to the DFT codebook group and the random codebook group are fixed, there is the case that it is difficult to select an optimal PMI corresponding to the channel variance. Inotherwords, for the optimal PMI corresponding to the channel variance, the possibility of being selected is higher as the numbers of DFT codebooks and random codebooks respectively belonging to the DFT codebook group and the random codebook group increase. Meanwhile, when the numbers of DFT codebooks and random codebooks are fixed, selectable PMIs are limited, and events may occur that it is not possible to select an optimal PMI corresponding to the channel variance. The inventor of the invention noted the respect that selectable PMIs are limited by the numbers of DFT codebooks and random codebooks being fixed, and that it is not possible to select an optimal PMI corresponding to the channel variance, and arrived at the invention.

A codebook control method according to the invention is to estimate a channel variance in a channel propagation path, and vary adaptively the configuration ratio between the DFT codebooks and the random codebooks included in the codebooks based on the channel variance. According to this codebook control method, the configuration ratio between the DFT codebooks and the random codebooks is varied adaptively based on the channel variance, it is thereby possible to increase or decrease the number of DFT codebooks or random codebooks corresponding to the channel variance, and it is thus possible to increase selectable PMIs, and to facilitate selection of an optimal PMI corresponding to the channel variance.

A codebook control method according to a first aspect of the invention is to measure a fading correlation value based on a channel variance in a channel propagation path, and vary adaptively the configuration ratio between the DFT codebooks and the random codebooks included in the codebooks corresponding to the measured fading correlation value. According to this codebook control method, the configuration ratio between the DFT codebooks and the random codebooks is varied adaptively corresponding to the fading correlation value measured based on the channel variance, it is thereby possible to effectively increase or decrease the number of DFT codebooks or random codebooks corresponding to the fading correlation value of the channel variance, and it is thus possible to increase selectable PMIs, and to facilitate selection of an optimal PMI corresponding to the channel variance.

In the codebook control method according to the first aspect, the number of DFT codebooks included in the entire codebooks is determined corresponding to a fading correlation value measured based on the channel variance, while the number obtained by subtracting the number of DFT codebooks from the number of codebooks of the entire codebooks is determined to the number of random codebooks, and the configuration ratio between the DFT codebooks and the random codebooks is thereby varied adaptively. In this case, it is possible to adjust the numbers of DFT codebooks and random codebooks corresponding to the fading correlation value measured based on the channel variance, and it is made possible to increase or decrease the numbers of DFT codebooks and random codebooks efficiently while reflecting the channel variance. In addition, the fading correlation value is obtained as a matrix element of a correlation matrix $R_k$, described later.

For example, as shown in FIG. 1, when the codebooks have sixteen PMIs, in the case where the fading correlation value is "0" (fading correlation between transmission/reception antennas is low), the number of DFT codebooks is determined to be "0", while the number of random codebooks is determined to be "16". Meanwhile, in the case where the fading correlation value is "1" (fading correlation between transmission/reception antennas is high), the number of DFT codebooks is determined to be "16", while the number of random codebooks is determined to be "0". Further, in the case where the fading correlation value is "0.5", each of the numbers of DFT codebooks and random codebooks is determined to be "8".

A codebook control method according to a second aspect of the invention is to calculate a correlation matrix indicative of fading correlation of a channel variance in a channel propagation path, and vary adaptively the configuration ratio between the DFT codebooks and the random codebooks included in the codebooks based on eigenvalues obtained by performing eigenvalue decomposition on the correlation matrix. According to this codebook control method, the configuration ratio between the DFT codebooks and the random codebooks is varied adaptively based on the eigenvalues of the correlation matrix indicative of fading correlation of the channel variance, it is thereby possible to increase or decrease the number of DFT codebooks or random codebooks corresponding to the channel variance, and it is thus possible to increase selectable PMIs, and to facilitate selection of an optimal PMI corresponding to the channel variance.

In the codebook control method according to the second aspect, a correlation matrix $R_k$ indicative of fading correlation of the channel variance in the channel propagation path is calculated by (Eq. 7), while calculated are eigenvalues $\sigma_r$ and eigenvectors $V_r$ obtained by performing eigenvalue decomposition on the correlation matrix $R_k$ according to (Eq. 8). In (Eq.7), "k" represents an index of a user (mobile station apparatus UE), and "N" represents the number of resource elements in the time and frequency domains. Further, "n" represents the average sample number used in derivation of the correlation matrix $R_k$, and "$H_{k,n}$" represents a channel matrix indicative of the channel variance between respective transmission and reception antennas of the channel propagation path. Furthermore, in (Eq. 8), "r" represents an index of M eigenvalues $\sigma_r$ and eigenvectors $V_r$ obtained by performing eigenvalue decomposition on the correlation matrix $R_k$ (assumed to be an MxM matrix).

$$(Eq.7)$$

$$\mathbf{R}_k = \frac{1}{N} \sum_{n=1}^{N} \mathbf{H}_{k,n} \mathbf{H}_{k,n}^{H}$$

$$(\mathrm{Eq}.8)$$

$$R_k = \sum_{r=1}^{8} \sigma_r^2 v_r v_r^H \text{ with } \sigma_1^2 \geq \cdots \geq \sigma_8^2$$

Then, in the codebook control method according to the second aspect, for example, among thus obtained eigenvalues $\sigma_r$, the number of eigenvalues $\sigma_r$ of which the ratio to the maximum eigenvalue $\sigma_{r\text{-max}}$ is a threshold or more is determined to the number of DFT codebooks included in the enter codebooks, while the number obtained by subtracting the number of DFT codebooks from the number of codebooks of the entire codebooks is determined to the number of random codebooks, and the configuration ratio between the DFT codebooks and the random codebooks is thereby varied adaptively. In this case, it is possible to adjust the numbers of DFT codebooks and random codebooks corresponding to eigenvalues $\sigma_r$ of the correlation matrix indicative of fading correlation of the channel variance, and it is made possible to increase or decrease the numbers of DFT codebooks and random codebooks efficiently while reflecting the channel variance.

For example, in the case of performing MIMO transmission performed among eight transmission antennas that the base station apparatus eNode B has and eight reception antennas that the mobile station apparatus UE has, it is assumed that (10, 8, 7, 6, 3, 1, 0.3, 0.1) are eight eigenvalues $\sigma_r$ obtained from the correlation matrix $R_k$ indicative of fading correlation of the channel variance in the channel propagation path. In this case, the maximum eigenvalue $\sigma_{r\text{-max}}$ is "10", and the ratios of respective eigenvalues $\sigma_r$ to the maximum eigenvalue $\sigma_{r\text{-max}}$ are (1, 0.8, 0.7, 0.6, 0.3, 0.1, 0.03, 0.01). In this case, when the threshold is assumed to be "0.2", the number of eigenvalues $\sigma_r$ more than the threshold is "5". Therefore, in this case, the number of DFT codebooks included in the entire codebooks is determined to "5", and the number of random codebooks is determined to "11".

In addition, the determination technique of the numbers of the DFT codebooks and the random codebooks (in other words, the determination technique of the configuration ratio between the DFT codebooks and the random codebooks) using eigenvalues $\sigma_r$ in the codebook control method according to the second aspect is not limited thereto, and is capable of being modified as appropriate. For example, eigenvalues $\sigma_r$ each normalized by the sum of the eigenvalues $\sigma_r$ are sorted in descending order, eigenvalues $\sigma_r$ are added sequentially in descending order of the eigenvalue $\sigma_r$, and the number of added eigenvalues $\sigma_r$ at the point at which the sum is a threshold or more may be the number of DFT codebooks, while the number obtained by subtracting the number of DFT codebooks from the number of codebooks of the entire codebooks maybe the number of random codebooks.

Described herein is the technique for selecting DFT codebooks such that the number included in the codebooks is determined. In addition, in the codebook control methods according to the first and second aspects, DFT codebooks are selected by the common selection technique. In the codebook control method according to the invention, codebooks for high correlation beforehand defining DFT codebooks that are selection targets are beforehand provided, and the number of DFT codebooks determined by the above-mentioned technique is selected from among the codebooks for high correlation. By thus selecting DFT codebooks from among beforehand provided codebooks for high correlation, it is possible to select DFT codebooks without requiring complicated arithmetic processing every selection. In addition, the codebooks for high correlation constitute first selection candidate codebooks.

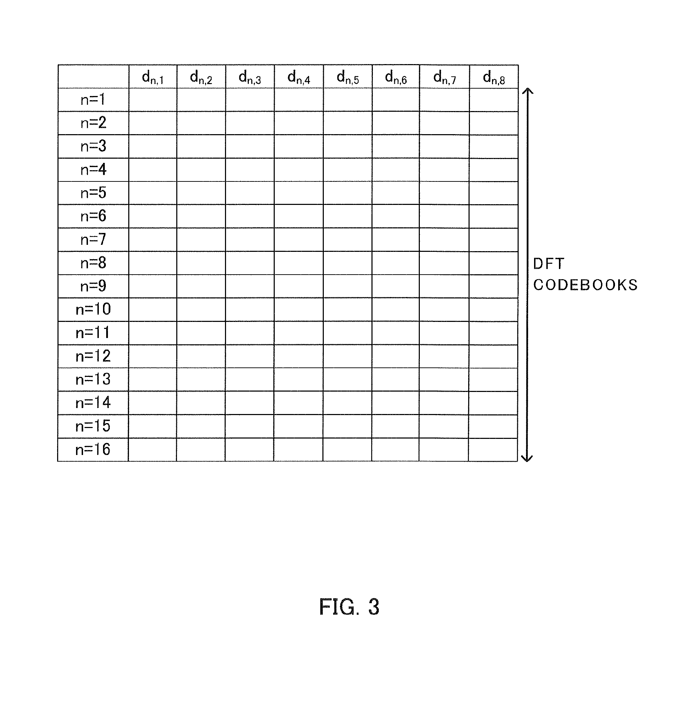

FIG. 3 is a diagram showing an example of codebooks for high correlation used in the codebook control method according to the invention. In addition, numerals shown in FIG. 3 are the same as the numerals shown in FIG. 1. Further, as in FIG. 1, FIG. 3 shows the case where the number of PMIs included in the codebooks is "16" and the number of ranks (streams) is "8". As shown in FIG. 3, sixteen DFT codebooks are included in the codebooks for high correlation.

When DFT codebooks are selected from the codebooks for high correlation, eigenvalues $\sigma_r$ and eigenvectors $V_r$ are obtained according to (Eq. 8), from the correlation matrix $R_k$ calculated by (Eq. 7) as described above. Then, in the relationship with the eigenvectors $V_r$, DFT codebooks of large array responses are selected corresponding to the number determined by the above-mentioned technique. More specifically, by calculation of (Eq.8), eigenvectors $V_1$ to $V_{N1}$ of large eigenvalues $\sigma_r$ are selected corresponding to $N_1$ (the number of DFT codebooks determined by the above-mentioned technique), and DFT codebooks are selected which include precoding vectors such that the inner product of the precoding vector corresponding to the precoding matrix defined in the DFT codebook is the maximum with respect to the eigenvectors $V_1$ to $V_{N1}$. In addition, in this case, precoding vectors that mutually overlap are selected.

For example, in the first codebook control method, when the number of DFT codebooks is determined to "10" corresponding to the fading correlation value, ten eigenvectors $V_1$ to $V_{10}$ of large eigenvalues $\sigma_r$ are selected, and ten DFT codebooks each including a precoding vector with the maximum inner product of the precoding vector with respect to the eigenvectors $V_1$ to $V_{10}$ are selected from the codebooks for high correlation as shown in FIG. 3. In this way, the number of DFT codebooks reflecting the channel variance in the channel propagation path is selected as codebooks.

By thus selecting DFT codebooks of large array responses to the eigenvectors $V_r$ obtained by performing eigenvalue decomposition on the correlation matrix $R_k$ corresponding to the number determined by the above-mentioned technique, it is possible to select DFT codebooks for enabling suitable gain to be obtained in the direction in which the signal arrives with respect to the antenna within the range of the number determined by the above-mentioned technique.

Described next is the technique for selecting random codebooks in the codebook control method according to the invention. In addition, in the codebook control methods according to the first and second aspects, random codebooks are selected by the common selection technique. In the codebook control method according to the invention, codebooks for low correlation beforehand defining random codebooks that are selection targets are beforehand provided, and the number of random codebooks determined by the above-mentioned technique is selected from among the codebooks for low correlation. By thus selecting random codebooks from among beforehand provided codebooks for low correlation, it is possible to select random codebooks without requiring complicated arithmetic processing every selection. In addition, the codebooks for low correlation constitute second selection candidate codebooks.

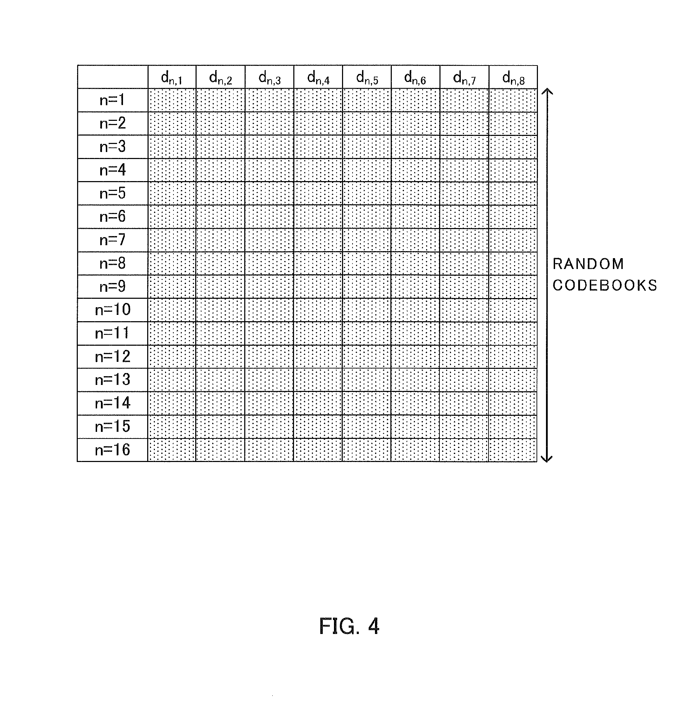

FIG. 4 is a diagram showing an example of codebooks for low correlation used in the codebook control method according to the invention. In addition, numerals shown in FIG. 4 are the same as the numerals shown in FIG. 1. Further, as in FIG. 1, FIG. 4 shows the case where the number of PMIs included in the codebooks is "16" and the number of ranks (streams) is "8". As shown in FIG. 4, sixteen random codebooks are included in the codebooks for low correlation. In addition, in the codebooks for low correlation as shown in FIG. 4, random codebooks are defined such that the minimum value of the chordal distance between random codebooks is the maximum.

When random codebooks are selected from the codebooks for low correlation, selected are random codebooks including precoding matrixes that maximize the minimum value of the chordal distance in the relationship with the precoding matrixes included in the entire codebooks including the DFT codebooks selected in the above-mentioned manner. For example, when ten DFT codebooks are selected as described above, six random codebooks that maximize the minimum value of the chordal distance in the relationship with the DFT codebooks and the selected random codebooks are selected from the codebooks for low correlation. By thus selecting the random codebooks including the precoding matrixes that maximize the minimum value of the chordal distance in the relationship with the precoding matrixes included in the entire codebooks corresponding to the number determined by the above-mentioned technique, it is possible to select random codebooks including precoding matrixes of which characteristics are not mutually similar within the range of the number determined by the above-mentioned technique.

In addition, in the arithmetic processing of the chordal distance in thus selecting random codebooks, it is preferable to eliminate the arithmetic processing between two different precoding matrixes included in the DFT codebooks. If the arithmetic processing between such precoding matrixes is performed, a part of the selected DFT codebooks may be updated. In this case, it is difficult to obtain gain (equal gain in any direction in which the signal arrives) expected due to having the DFT structure. In the case of eliminating the arithmetic processing between two different precoding matrixes included in the DFT codebooks, it is possible to prevent the occurrence of events that a part of the DFT codebooks are thus updated, and it is possible to obtain gain originally available in the DFT codebooks.

An Embodiment of the invention will specifically be described below with reference to accompanying drawings. Described herein is the case of using the base station apparatus and mobile station apparatus that support the LTE-A system.

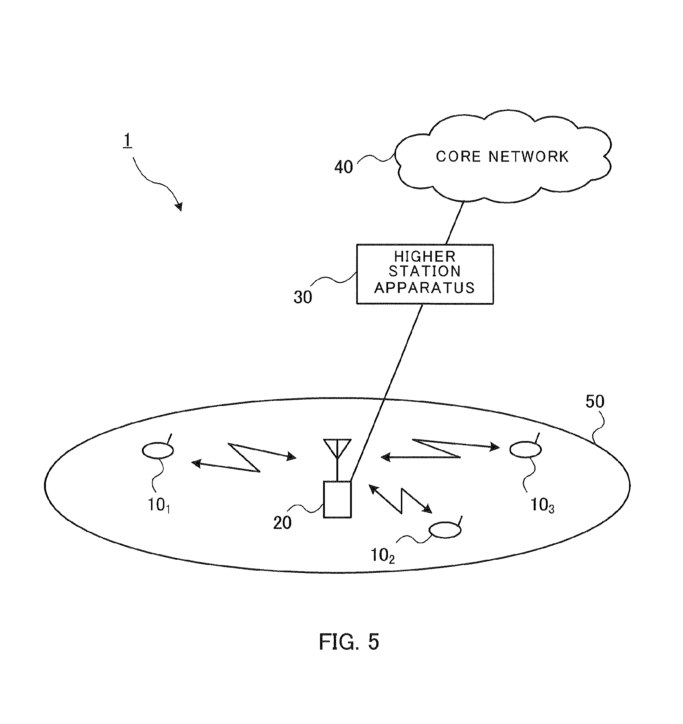

Referring to FIG. 5, described is a mobile communication system 1 having mobile station apparatuses (UEs) 10 and base station apparatus (eNode B) 20 according to one Embodiment of the invention. FIG. 5 is a diagram to explain a configuration of the mobile communication system 1 having mobile station apparatuses 10 and base station apparatus 20 according to the Embodiment of the invention. In addition, for example, the mobile communication system 1 as shown in FIG. 5 is a system including the LTE system or Super 3G. Further, the mobile communication system 1 may be called IMT-Advanced or may be called 4G.

As shown in FIG. 5, the mobile communication system 1 includes a base station apparatus 20 and a plurality of mobile station apparatuses 10 ($10_1$, $10_2$, $10_3$, ...$10_n$, n is an integer where n>0) that communicate with the base station apparatus 20, and is comprised thereof. The base station apparatus 20 is connected to a higher station apparatus 30, and the higher station apparatus 30 is connected to a core network 40. The mobile station apparatuses 10 communicate with the base station apparatus 2 in a cell 50. In addition, for example, the higher station apparatus 30 includes an access gateway apparatus, Radio Network Controller (RNC), Mobility Management Entity (MME) and the like, but is not limited thereto.

Each of the mobile station apparatuses ($10_1$, $10_2$, $10_3$,···$10_n$) has the same configuration, function and state, and is described as a mobile station apparatus 10 unless otherwise specified in the following description. Further, for convenience in description, the description is given while assuming that equipment which performs radio communication with the base station apparatus 20 is the mobile station apparatus 10, and more generally, the equipment may be user equipment (UE) including mobile terminal apparatuses and fixed terminal apparatuses.

In the mobile communication system 1, as a radio access scheme, OFDMA (Orthogonal Frequency Division Multiple Access) is applied in downlink, while SC-FDMA (Single-Carrier Frequency Division Multiple Access) is applied in uplink. OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing the system band into bands comprised of a single or consecutive resource blocks for each terminal so that a plurality of terminals uses mutually different bands, and thereby reducing interference among the terminals.

Described herein are communication channels in the LTE system. In downlink, used are the PDSCH (Physical Downlink Shared Channel) shared among the mobile station apparatuses 10, and downlink L1/L2 control channels (PDCCH (Physical Downlink Control Channel), PCFICH (Physical Control Format Indicator Channel), PHICH (Physical Hybrid-ARQ Indicator Channel)). User data i.e. normal data signals are transmitted on the PDSCH. The transmission data is included in the user data. In addition, a component carrier CC assigned to a mobile station apparatus 10 in the base station apparatus 20 and scheduling information is notified to the mobile station apparatus 10 on the L1/L2 control channel.

In uplink, used are the PUSCH (Physical Uplink Shared Channel) shared among the mobile station apparatuses 10, and the PUCCH (Physical Uplink Control Channel) that is a control channel in uplink. User data is transmitted on the PUSCH. Meanwhile, radio quality information (CQI: Channel Quality Indicator) in downlink and the like are transmitted on the PUCCH.

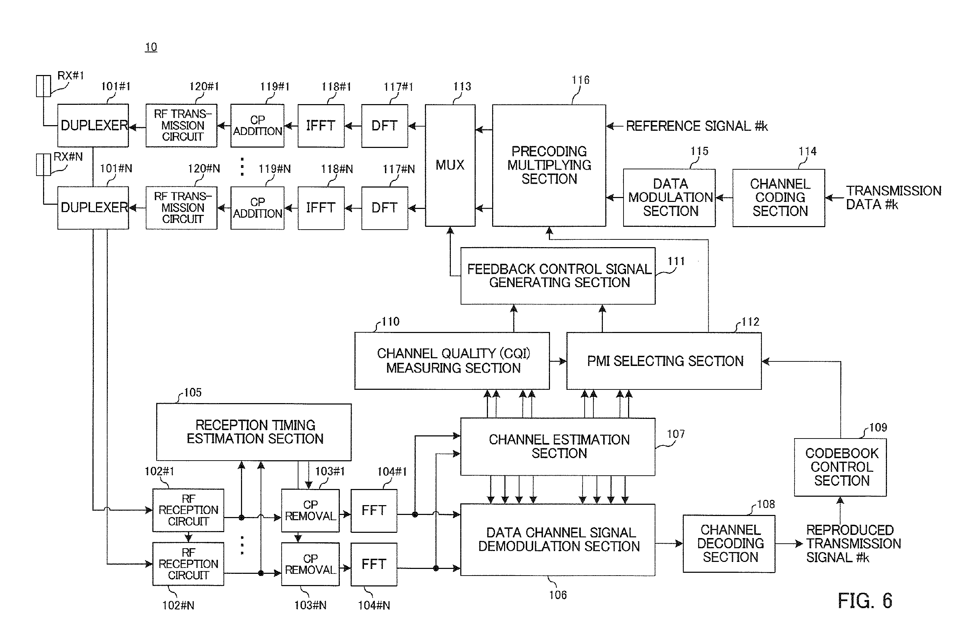

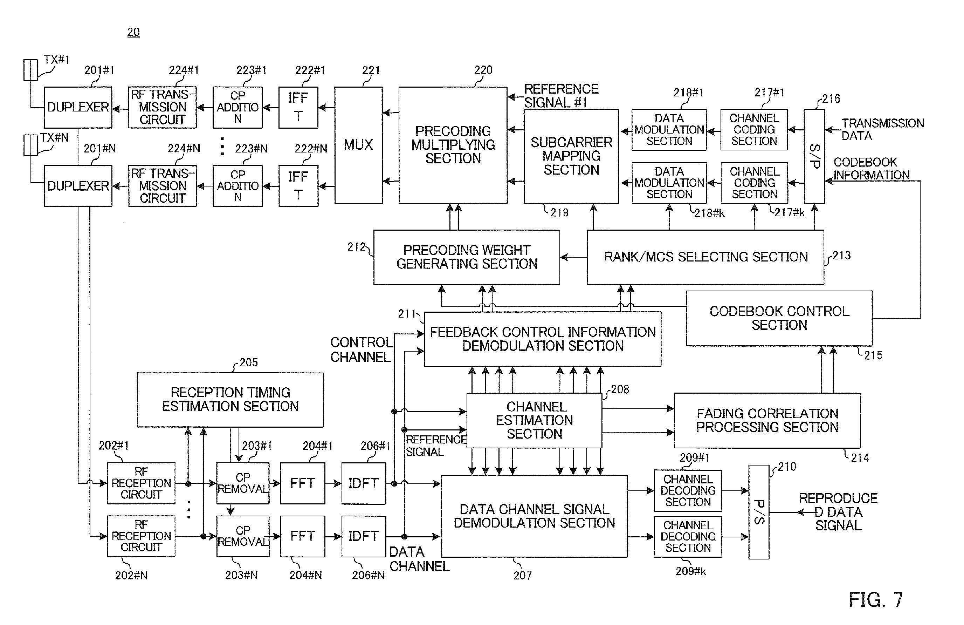

Configurations of the mobile station apparatus 10 and base station apparatus 20 according to this Embodiment will be described next with reference to FIGs. 6 and 7. FIG. 6 is a block diagram illustrating the configuration of the mobile station apparatus 10 according to this Embodiment. FIG. 7 is a block diagram illustrating the configuration of the base station apparatus 20 according to this Embodiment. In addition, the configurations of the mobile station apparatus 10 and the base station apparatus 20 as shown in FIGs. 6 and 7 are simplified to explain the invention, and are assumed to have the configurations that a normal mobile station apparatus and base station apparatus have, respectively.

In the mobile station apparatus 10 as shown in FIG. 6, transmission signals transmitted from the base station apparatus 20 are received in reception antennas RX#1 to RX#N, electrically divided into transmission paths and reception paths in duplexers 101#1 to 101#N, and then, output to RF reception circuits 102#1 to 102#N. Then, the signals undergo frequency conversion processing for converting a radio-frequency signal into a baseband signal in the RF reception circuits 102#1 to 102#N. CPs are removed from the baseband signals subjected to the frequency conversion processing in Cyclic Prefix (CP) removing sections 103#1 to 103#N, and the resultants are output to Fast Fourier Transform sections (FFT sections) 104#1 to 104#N. A reception timing estimation section 105 estimates reception timing from reference signals included in the reception signals, and notifies the CP removing sections 103#1 to 103#N of the estimation result. The FFT sections 104#1 to 104#N perform Fourier transform on the input reception signals, and transform the time-series signals into the signals in the frequency domain. Data channel signals included in the reception signals are output to a data channel signal demodulation section 106. In addition, the reception-series processing sections constitute the receiving means for receiving codebook information, described later.

The data channel signal demodulation section 106 divides the data channel signals input from the FFT sections 104#1 to 104#N, for example, by Minimum Mean Squared Error (MMSE) or Maximum Likelihood Detection (MLD) signal division method. By this means, the reception signals coming from the base station apparatus 20 are divided into data channel signals concerning users #1 to #k, and a data channel signal concerning a user (herein, assumed to be a user k) of the mobile station apparatus 10 is extracted.

A channel estimation section 107 estimates channel variances in channel propagation paths from reference signals included in the reception signals output from the FFT sections 104#1 to 104#N, and notifies the estimated channel variances to the data channel signal demodulation section 106, and a channel quality measuring section 110 and PMI selecting section 112, described later. The data channel signal demodulation section 106 divides the data channel signals by the above-mentioned MLD signal division method or the like based on the notified channel variances. By this means, the reception signal concerning the user k is demodulated.

In addition, it is assumed that the extracted data channel signal concerning the user k is demapped in a subcarrier demapping section, not shown, and is restored to the time-series signal, prior to the demodulation processing in the data channel signal demodulation section 106. The data channel signal concerning the user k demodulated in the data channel signal demodulation section 106 is output to a channel decoding section 108. Then, the channel decoding section 108 performs channel decoding processing, and a transmission signal (hereinafter, referred to as a "transmission signal #k") concerning the user k is thus reproduced.

The reproduced transmission signal #k includes codebook information notified from the base station apparatus 20. The codebook information includes information (identification information) for identifying DFT codebooks and random codebooks selected as codebooks in the base station apparatus, and information indicative of the correspondence relationship between the precoding matrix and the PMI included in the DFT codebooks and random codebooks. In addition, the codebook information is included in a higher layer signal (RRC signaling) and is notified. Particularly, the identification information of DFT codebooks and random codebooks is called "codebook subset restriction" in the LTE system, for example. The mobile station apparatus 10 side designates the codebook size and precoding matrixes used in a respective codebook group restricted in use by a signal for restricting subsets of precoding matrixes used in selection of PMI. Such codebook information is acquired from a codebook control section 109, or the channel decoding section 108 outputs the information to the codebook control section 109.

The codebook control section 109 varies the configuration ratio of codebooks corresponding to the information included in the codebook information, and identifies codebooks (DFT codebooks and random codebooks) used in data transmission. For example, the codebook control section 109 holds the above-mentioned codebooks for high correlation and codebooks for low correlation, and identifies codebooks used in data transmission based on the transmitted codebook information. In this case, for example, when the fading correlation value is high, codebooks with a high configuration ratio of DFT codebooks are selected, and when the fading correlation value is low, codebooks with a high configuration ratio of random codebooks are selected.

The channel quality (CQI) measuring section 110 measures channel quality (CQI) based on the channel variance notified from the channel estimation section 107. Then, the section 110 notifies a feedback control signal generating section 111 of the CQI that is the measurement result. The PMI selecting section 112 constitutes the selecting means, and selects a PMI from the codebooks identified in the codebook control section 109, based on the channel variance notified from the channel estimation section 107. Then, the section 112 notifies the feedback control signal generating section 111 of the selected PMI. In addition, the PMI selected in the PMI selecting section 112 constitutes the precoding matrix identification information.

Based on the CQI and PMI notified from the channel quality (CQI) measuring section 110 and PMI selecting section 112, the feedback control signal generating section 111 generates a control signal (for example, PUCCH) to transmit the CQI and PMI to the base station apparatus 20 as feedback. In this case, the control signal for feedback includes the PMI selected from the codebooks identified in the codebook control section 109. The control signal generated in the feedback control signal generating section 111 is output to a multiplexer (MUX) 113.

Meanwhile, transmission data #k concerning the user #k output from a higher layer is subjected to channel coding in a channel coding section 114, is subjected to data modulation in a data modulation section 115, and output to a precoding multiplying section 116. The precoding multiplying section 116 receives a reference signal concerning the user #k generated in a reference signal generating section, not shown. Based on the precoding weights (precoding matrix) obtained from the PMI selected in the PMI selecting section 112, the precoding multiplying section 116 shifts the phase and/or amplitude of the transmission data #k and reference signal for each of reception antennas RX#1 to RX#N. The transmission data #k and reference signal with the phase and/or amplitude shifted is output to the multiplexer (MUX) 113.

The multiplexer (MUX) 113 combines the transmission data #k and reference signal with the phase and/or amplitude shifted, and the control signal generated in the feedback control signal generating section 111, and generates transmission signals for each of the reception antennas RX#1 to RX#N. The transmission signals generated in the multiplexer (MUX) 113 are subjected to discrete Fourier transform in Discrete Fourier Transform sections (DFT) 117#1 to 117#N, and each transmission signal sequence is spread to a transmission bandwidth (DFT size) in the frequency domain. Then, Inverse Fast Fourier Transform sections (IFFT) 118#1 to 118#N perform inverse fast Fourier transform and thereby transform the signals in the frequency domain into the signals in the time domain, and then, the signals are provided with CPs in CP adding sections 119#1 to 119#N, and output to RF transmission circuits 120#1 to 120#N. Then, the RF transmission circuits 120#1 to 120#N perform frequency conversion processing for converting into the radio frequency band on the signals, and then, the signals are output to the reception antennas RX#1 to RX#N via the duplexers 101#1 to 101#N, and are transmitted from the reception antennas RX#1 to RX#N to the base station apparatus 20 in uplink.

Thus, in the mobile station apparatus 10 according to this Embodiment, codebooks used in data transmission are identified based on the codebook information notified from the base station apparatus 20, and a PMI is selected that is associated with a precodingmatrix defined in the codebook. At this point, in the identified code books, the configuration ratio between the DFT codebooks and the random codebooks is adjusted based on the channel variance estimated in the base station apparatus 20. Therefore, it is possible to increase or decrease the number of DFT codebooks or random codebooks corresponding to the channel variance, and it is thus possible to increase selectable PMIs, and to facilitate selection of an optimal PMI corresponding to the channel variance.

Particularly, in the codebook control method according to the first aspect, in the identified codebooks, the configuration ratio between the DFT codebooks and the random codebooks is adjusted corresponding to the fading correlation value measured in the base station apparatus 20. Therefore, it is possible to increase or decrease the number of DFT codebooks or random codebooks corresponding to the fading correlation value of the channel variance, and it is thus possible to increase selectable PMIs, and to facilitate selection of an optimal PMI corresponding to the channel variance. Similarly, in the codebook control method according to the second aspect, in the identified codebooks, the configuration ratio between the DFT codebooks and the random codebooks is adjusted based on eigenvalues of the correlation matrix $R_k$ calculated in the base station apparatus 20. Therefore, it is possible to increase or decrease the number of DFT codebooks or random codebooks corresponding to fading correlation of the channel variance, and it is thus possible to increase selectable PMIs, and to facilitate selection of an optimal PMI corresponding to the channel variance.

In the base station apparatus 20 as shown in FIG. 7, transmission signals transmitted from the mobile station apparatuses 10 are received in the transmission antennas TX#1 to TX#N, electrically divided into transmission paths and reception paths in the duplexers 201#1 to 201#N, and then, output to RF reception circuits 202#1 to 202#N. Then, the signals undergo frequency conversion processing for converting a radio-frequency signal into a baseband signal in the RF reception circuits 202#1 to 202#N. CPs are removed from the baseband signals subjected to the frequency conversion processing in Cyclic Prefix (CP) removing sections 203#1 to 203#N, and the resultants are output to Fast Fourier Transform sections (FFT sections) 204#1 to 204#N. A reception timing estimation section 205 estimates reception timing from reference signals included in the reception signals, and notifies the CP removing sections 203#1 to 203#N of the estimation result. The FFT sections 204#1 to 204#N perform Fourier transform on the input reception signals, and transform the time-series signals into the signals in the frequency domain. The reception signals transformed into the signals in the frequency domain are subjected to inverse discrete Fourier transform in Inverse Discrete Fourier Transform sections (IDFT) 206#1 to 206#N, and are despread to time-domain signals. Then, data channel signals included in the reception signals are output to a data channel signal demodulation section 207.

The data channel signal demodulation section 207 divides the data channel signals input from the IDFT sections 206#1 to 206#N, for example, by Minimum Mean Squared Error (MMSE) or Maximum Likelihood Detection (MLD) signal division method. By this means, the data channel signals coming from the mobile station apparatuses 10 are divided into data channel signals concerning users #1 to #k, and the data channel signals concerning respective mobile station apparatuses 10 are extracted.

The channel estimation section 208 constitutes the estimation means, estimates channel variances from reference signals included in the reception signals output from the IDFT sections 206#1 to 206#N, and notifies the estimated channel variances to the data channel signal demodulation section 207, and a feedback control information demodulation section 211 and fading correlation processing section 214, described later. The data channel signal demodulation section 207 divides the data channel signals by the above-mentioned MLD signal division method or the like, based on the notified channel variances. By this means, the reception signals concerning respective mobile station apparatuses 10 are demodulated.

In addition, it is assumed that the extracted data channel signals concerning respective mobile station apparatuses 10 are demapped in a subcarrier demapping section, not shown, and are stored to the time-series signals, prior to the demodulation processing in the data channel signal demodulation section 207. The data channel signals concerning respective mobile station apparatuses 10 demodulated in the data channel signal demodulation section 207 are output to channel decoding sections 209#1 to 209#k. Then, the channel decoding sections 209#1 to 209#k perform channel decoding processing, then the signals are subjected to parallel/serial transform in a parallel/serial transform section (P/S) 210, and the data channel signal (data signal) from each mobile station apparatus 10 is thereby reproduced.

The feedback control information demodulation section 211 demodulates control channel signals (for example, PDSCH) included in the reception signals input from the IDFT sections 206#1 to 206#k. At this point, the feedback control information demodulation section 211 demodulates control channel signals, based on the channel variances notified from the channel estimation section 208. Each control channel signal demodulated in the feedback control information demodulation section 211 is output to a precoding weight generating section 212, and rank/modulation coding scheme (MCS: Modulation Coding Scheme) selecting section 213.

A fading correlation processing section 214 performs processing on the channel variances notified from the channel estimation section 208. For example, in the case of applying the above-mentioned codebook control method according to the first aspect, the fading correlation processing section 214 constitutes the measuring means, and measures fading correlation values based on the channel variances notified from the channel estimation section 208. In addition, the fading correlation values are obtained as matrix elements of the correlation matrix $R_k$ calculated by above-mentioned (Eq.7). Further, in the case of applying the above-mentioned codebook control method according to the second aspect, the fading correlation processing section 214 constitutes the calculation means, and calculates the correlation matrix $R_k$ indicative of fading correlation of the channel variances notified from the channel estimation section 208. The fading correlation values or correlation matrix $R_k$ are output to a codebook control section 215.

The codebook control section 215 constitutes the control means, and adaptively varies the configuration ratio between the DFT codebooks and the random codebooks included in codebooks corresponding to the fading correlation value input from the fading correlation processing section 214. For example, in the codebook control method according to the first aspect, the codebook control section 215 determines the number of DFT codebooks corresponding to the fading correlation value, while determining the number of random codebooks, and thereby controls the configuration ratio. Meanwhile, in the codebook control method according to the second aspect, the codebook control section 215 determines the number of DFT codebooks based on eigenvalues $\sigma_r$ of the correlation matrix $R_k$ indicative of fading correlation, while determining the number of random codebooks, and thereby controls the configuration ratio.

Further, the codebook control section 215 selects DFT codebooks and random codebooks constituting the codebooks by the above-mentioned techniques. In other words, the codebook control section 215 holds the codebooks for high correlation and the codebooks for low correlation, and selects DFT codebooks with large array responses in the relationship with the eigenvector $V_r$ obtained from the correlation matrix $R_k$. Then, the codebook control section 215 selects random codebooks including precoding matrixes that maximize the minimumvalue of the chordal distance in the relationship with the codebooks including the selected DFT codebooks. The section 215 outputs the identification information of thus selected DFT codebooks and random codebooks, and information indicative of the correspondence relationship between the precoding matrix and PMI included in the codebooks as the codebook information to the precoding weight generating section 212 and a serial/parallel transform section (S/P) 216.

The precoding weight generating section 212 selects precoding weights (precoding matrix) from the codebooks varied by the codebook control section 215, based on the PMIs included in the control channel signals notified from the feedback control information demodulation section 211. At this point, the rank notified from the rank/MCS selecting section 213 is also considered. The selected precoding weights are output to a precoding weight multiplying section 200, described later.

The rank/MCS selecting section 213 selects the transmission rank and MCS, based on the PMI included in the control channel signal notified from the feedback control information demodulation section 211. The selected transmission rank and MCS are output to the serial/parallel transform section (S/P) 216, described later, channel coding sections 217#1 to 217#k, data modulation sections 218#1 to 218#k and subcarrier mapping section 219.

Meanwhile, transmission data #1 to #k to user #1 to users #1 to #k is output to the serial/parallel transform section (S/P) 216, is subjected to serial/parallel transform, and then, is output to the channel coding sections 217#1 to 217#k respectively associated with the users #1 to #k. Further, the serial/parallel transform section (S/P) 216 receives the codebook information input from the codebook control section 215, and performs serial/parallel transform on the codebook information together with the transmission data #1 to #k. In addition, in the serial/parallel transform processing in the serial/parallel transform section (S/P) 216, the section 216 refers to the rank/MCS notified from the rank/MCS selecting section 213.

The transmission data #1 to #k and codebook information subjected to serial/parallel transform is subjected to channel coding in the channel coding sections 217#1 to 217#k, then output to the data modulation sections 218#1 to 218#k and is subjected to datamodulation. At this point, channel coding and data modulation is performed based on the MCS provided from the rank/MCS selecting section 213. The transmission data #1 to #k and codebook information subjected to data modulation in the data modulation sections 218#1 to 218#k is subjected inverse Fourier transform in discrete Fourier transform sections, not shown, and the time-series signals are thereby transformed into the signals in the frequency domain, and are output to the subcarrier mapping section 219.

The subcarrier mapping section 219 maps the transmission data #1 to #k and codebook information to subcarriers corresponding to scheduling information provided from a scheduler, not shown. At this point, the subcarrier mapping section 219 maps (multiplexes) reference signals #1 to #k input from the reference signal generating section, not shown, to the subcarriers, together with the transmission data #1 to #k and codebook information. The transmission data #1 to #k and codebook information thus mapped to subcarriers is output to the precoding multiplying section 220.

The precoding multiplying section 220 shifts the phase and/or amplitude of the transmission data #1 to #k and codebook information for each of the transmission antennas TX#1 to TX#N, based on the precoding weights provided from the precoding weight generating section 212 (weighting of the transmission antennas TX#1 to TX#N by precoding). Then, the transmission data #1 to #k and codebook information with the phase and/or amplitude shifted in the precoding multiplying section 220 is output to a multiplexer (MUX) 221.

The multiplexer (MUX) 221 combines the transmission data #1 to #k and codebook information with the phase and/or amplitude shifted, and generates transmission signals for each of the transmission antennas TX#1 to TX#N. The transmission signals generated in the multiplexer (MUX) 221 are subjected to inverse fast Fourier transform in Inverse Fast Fourier Transform sections (IFFT) 222#1 to 222#N, and the signals in the frequency domain are thus transformed into the signals in time domain. Then, the signals are provided with CPs in Cyclic Prefix (CP) adding sections 223#1 to 223#N, and output to RF transmission circuits 224#1 to 224#N. Then, the RF transmission circuits 224#1 to 224#N perform frequency conversion processing for converting into the radio frequency band on the signals, and then, the signals are output to the transmission antennas TX#1 to TX#N via the duplexers 201#1 to 201#N, and are transmitted from the transmission antennas TX#1 to TX#N to the mobile station apparatuses 10 in uplink.

Thus, the base station apparatus 20 according to this Embodiment estimates a channel variance in a channel propagation path, varies adaptively the configuration ratio between the DFT codebooks and the random codebooks included in the codebooks based on the channel variance, and is thereby capable of increasing or decreasing the number of DFT codebooks or random codebooks corresponding to the channel variance. It is thus possible to increase selectable PMIs, and to facilitate selection of an optimal PMI corresponding to the channel variance.

For example, the base station apparatus 20 according to this Embodiment measures a fading correlation value based on a channel variance in a channel propagation path, varies adaptively the configuration ratio between the DFT codebooks and the random codebooks included in the codebooks corresponding to the measured fading correlation value, and is thereby capable of effectively increasing or decreasing the number of DFT codebooks or random codebooks corresponding to the fading correlation value of the channel variance. It is thus possible to increase selectable PMIs, and to facilitate selection of an optimal PMI corresponding to the channel variance.

Further, the base station apparatus 20 according to this Embodiment varies adaptively the configuration ratio between the DFT codebooks and the random codebooks based on eigenvalues of the correlation matrix $R_k$ indicative of fading correlation of the channel variance in the channel propagation path, and is thereby capable of effectively increasing or decreasing the number of DFT codebooks or random codebooks corresponding to eigenvalues of the correlation matrix $R_k$ indicative of fading correlation of the channel variance the channel variance. It is thus possible to increase selectable PMIs, and to facilitate selection of an optimal PMI corresponding to the channel variance.

Furthermore, the base station apparatus 20 according to this Embodiment includes the identification information of selected DFT codebooks and random codebooks, and information indicative of the correspondence relationship between the precoding matrix and the PMI included in the codebooks in the codebook information to notify the mobile station apparatus 10 by higher layer signaling, and is thereby capable of reliably conveying, to the mobile station apparatus 10, the codebooks with the configuration ratio between the DFT codebooks and the random codebooks varied adaptively in the base station apparatus 20.

In the above-mentioned descriptions, the present invention is specifically described using the above-mentioned Embodiment, but it is obvious to a person skilled in the art that the invention is not limited to the Embodiment described in the Description. The invention is capable of being carried into practice as modified and changed aspects without departing from the subject matter and scope of the invention defined by the descriptions of the scope of the claims. Accordingly, the descriptions of the Description are intended for illustrative explanation, and do not have any restrictive meaning to the invention.

The present application is based on Japanese Patent Application No. 2010-052140 filed on March 9, 2010, entire content of which is expressly incorporated by reference herein.

## Claims

1. A method of controlling codebooks comprised of a plurality of first codebooks having a DFT (Discrete Fourier Transform) structure for defining precoding matrixes that are selected when correlation between antennas in a base station apparatus is high and a plurality of second codebooks fordefiningprecodingmatrixes that are selected when correlation between antennas in the base station apparatus is low, comprising:

    estimating a channel variance in a channel propagation path; and
    varying adaptively a configuration ratio between the first and second codebooks included in the codebooks based on the channel variance.

2. The method of controlling codebooks according to claim 1, further comprising:

    measuring a fading correlation value based on the channel variance, wherein the configuration ratio between the first and second codebooks included in the codebooks is varied corresponding to the fading correlation value.

3. The method of controlling codebooks according to claim 2, wherein the number of the first codebooks included in the codebooks is determined corresponding to the fading correlation value, while the number of the second codebooks is determined to the number obtained by subtracting the number of the first codebooks from the number of codebooks of the entire codebooks.

4. The method of controlling codebooks according to claim 1, further comprising:

    calculating a correlation matrix indicative of fading correlation of the channel variance,

    wherein the configuration ratio between the first and second codebooks included in the codebooks is varied based on eigenvalues obtained by performing eigenvalue decomposition on the correlation matrix.

5. The method of controlling codebooks according to claim 4, wherein among the eigenvalues, the number of eigenvalues with a ratio to a maximum eigenvalue being a threshold or more is determined to the number of the first codebooks, while the number of the second codebooks is determined to the number obtained by subtracting the number of the first codebooks from the number of codebooks of the entire codebooks.

6. The method of controlling codebooks according to claim 2, wherein first selection candidate codebooks for defining the first codebooks that are selection candidates are beforehand provided, and the first codebooks are selected from the first selection candidate codebooks based on the correlation matrix indicative of fading correlation of the channel variance.

7. The method of controlling codebooks according to claim 6, wherein the first codebooks including precoding matrixes with an large array response to an eigenvector obtained by performing eigenvalue decomposition on the correlation matrix are selected corresponding to the number of the first codebooks.

8. The method of controlling codebooks according to claim 6, wherein second selection candidate codebooks for defining the second codebooks that are selection candidates are beforehand provided, and the second codebooks, including precoding matrixes that maximize a minimum value of a chordal distance in the relationship with the precoding matrixes included in the entire codebooks including the selected first codebooks, are selected from the second selection candidate codebooks.

9. The method of controlling codebooks according to claim 8, further comprising:

notifying a mobile station apparatus of codebook information including information on the first and second codebooks that are selected.

10. A base station apparatus that performs precoding using codebooks comprised of a plurality of first codebooks having a DFT (Discrete Fourier Transform) structure for defining precoding matrixes that are selected when correlation between antennas in the base station apparatus is high and a plurality of second codebooks for defining precoding matrixes that are selected when correlation between antennas in the base station apparatus is low, comprising:

an estimation section that estimates a channel variance in a channel propagation path; and a control section that varies adaptively a configuration ratio between the first and second codebooks included in the codebooks based on the channel variance.

11. The base station apparatus according to claim 10, further comprising:

a measuring section that measures a fading correlation value based on the channel variance,

wherein the control section varies the configuration ratio between the first and second codebooks included in the codebooks corresponding to the fading correlation value.

12. The base station apparatus according to claim 10, further comprising:

a calculating section that calculates a correlation matrix indicative of fading correlation of the channel variance,

wherein the control section varies the configuration ratio between the first and second codebooks included in the codebooks based on eigenvalues obtained by performing eigenvalue decomposition on the correlation matrix.

13. A mobile station apparatus that transmits precoding matrix identification information to a base station apparatus according to codebooks comprised of a plurality of first codebooks having a DFT (Discrete Fourier Transform) structure for defining precoding matrixes that are selected when correlation between antennas in the base station apparatus is high and a plurality of second codebooks for defining precoding matrixes that are selected when correlation between antennas in the base station apparatus is low, comprising:

a receiving section that receives codebook information including information on the first and second codebooks selected based on a channel variance in a channel propagation path; and
a selecting section that selects the precoding matrix identification information from the first and second codebooks included in the codebook information.

| | $d_{n,1}$ | $d_{n,2}$ | $d_{n,3}$ | $d_{n,4}$ | $d_{n,5}$ | $d_{n,6}$ | $d_{n,7}$ | $d_{n,8}$ | |
|---|---|---|---|---|---|---|---|---|---|
| n=1 | | | | | | | | | |
| n=2 | | | | | | | | | |
| n=3 | | | | | | | | | |
| n=4 | | | | | | | | | DFT CODEBOOKS |
| n=5 | | | | | | | | | |
| n=6 | | | | | | | | | |
| n=7 | | | | | | | | | |
| n=8 | | | | | | | | | |
| n=9 | | | | | | | | | |
| n=10 | | | | | | | | | |
| n=11 | | | | | | | | | RANDOM CODEBOOKS |
| n=12 | | | | | | | | | |
| n=13 | | | | | | | | | |
| n=14 | | | | | | | | | |
| n=15 | | | | | | | | | |
| n=16 | | | | | | | | | |

FIG. 1

FIG. 2

| | $d_{n,1}$ | $d_{n,2}$ | $d_{n,3}$ | $d_{n,4}$ | $d_{n,5}$ | $d_{n,6}$ | $d_{n,7}$ | $d_{n,8}$ |
|---|---|---|---|---|---|---|---|---|
| n=1 | | | | | | | | |
| n=2 | | | | | | | | |
| n=3 | | | | | | | | |
| n=4 | | | | | | | | |
| n=5 | | | | | | | | |
| n=6 | | | | | | | | |
| n=7 | | | | | | | | |
| n=8 | | | | | | | | |
| n=9 | | | | | | | | |
| n=10 | | | | | | | | |
| n=11 | | | | | | | | |
| n=12 | | | | | | | | |
| n=13 | | | | | | | | |
| n=14 | | | | | | | | |
| n=15 | | | | | | | | |
| n=16 | | | | | | | | |

DFT CODEBOOKS

FIG. 3

|  | $d_{n,1}$ | $d_{n,2}$ | $d_{n,3}$ | $d_{n,4}$ | $d_{n,5}$ | $d_{n,6}$ | $d_{n,7}$ | $d_{n,8}$ |
|---|---|---|---|---|---|---|---|---|
| n=1 | | | | | | | | |
| n=2 | | | | | | | | |
| n=3 | | | | | | | | |
| n=4 | | | | | | | | |
| n=5 | | | | | | | | |
| n=6 | | | | | | | | |
| n=7 | | | | | | | | |
| n=8 | | | | | | | | |
| n=9 | | | | | | | | |
| n=10 | | | | | | | | |
| n=11 | | | | | | | | |
| n=12 | | | | | | | | |
| n=13 | | | | | | | | |
| n=14 | | | | | | | | |
| n=15 | | | | | | | | |
| n=16 | | | | | | | | |

RANDOM CODEBOOKS

FIG. 4

FIG. 5

FIG. 6

FIG. 7

EP 2 547 020 A1

| **INTERNATIONAL SEARCH REPORT** | International application No. |
|---|---|
| | PCT/JP2011/054495 |

| A. CLASSIFICATION OF SUBJECT MATTER |
|---|
| *H04J99/00*(2009.01)i, *H04J11/00*(2006.01)i, *H04W28/18*(2009.01)i |

According to International Patent Classification (IPC) or to both national classification and IPC

| B. FIELDS SEARCHED |
|---|
| Minimum documentation searched (classification system followed by classification symbols) |
| H04J99/00, H04J11/00, H04W28/18 |

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)
IEEE Xplore, CiNii

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2009-071825 A (NTT Docomo Inc.), 02 April 2009 (02.04.2009), paragraphs [0033] to [0056] & EP 2037646 A2 & CN 101388702 A | 1-13 |
| A | NTT DOCOMO, "Views on Codebook Design for Downlink 8Tx MIMO", 3GPP TSG RAN WG1 Meeting #60, R1-101219, 2010.02.22 | 1-13 |
| A | CATT, "Codebook design for 8Tx DL MIMO", 3GPP TSG RAN WG1 Meeting #60, R1-100890, 2010.02.22 | 1-13 |

| ☐ Further documents are listed in the continuation of Box C. | ☐ See patent family annex. |
|---|---|

| * Special categories of cited documents: | "T" | later document published after the international filing date or priority date and not in conflict with the application but cited to understand the principle or theory underlying the invention |
|---|---|---|
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 17 May, 2011 (17.05.11) | 31 May, 2011 (31.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 547 020 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010052140 A

**Non-patent literature cited in the description**

- Requirements for Evolved UTRA and Evolved UTRAN. *3GPP TR 25.913*